# EUROPEAN PATENT SPECIFICATION

(11) **EP 0 626 626 B1**
(45) Date of publication and mention of the grant of the patent: **27.08.1997**
(21) Application number: 94303490.0
(22) Date of filing: 16.05.1994
(51) Int. Cl.: G04G 9/02, G01R 13/40, G09G 3/00

(54) **Display system**
Anzeigesystem
Système d'affichage

(30) Priority: 18.05.1993 GB 9310190
(43) Date of publication of application: 30.11.1994
(73) Proprietor: Meggitt (U.K.) Limited, Wimborne, Dorset, BH21 4EL (GB)
(72) Inventor: Young,Robert William, Lymington Hampshire SO41 0TY (GB)
(74) Representative: Skone James, Robert Edmund

(56) References cited:
- DE-A- 3 238 487
- PATENT ABSTRACTS OF JAPAN vol. 13, no. 57 (P-825) (3405) 9 February 1989 & JP-A-63 247 728

## Description

The invention relates to a display system such as a liquid crystal display (LCD) system.

A typical display system is of the kind having a number of selectively actuable display elements which can be actuated individually to generate a number of different display patterns. Such systems are hereinafter referred to as of the kind described.

In some display systems, it is necessary to simulate movement and this is usually achieved by providing a number of display elements and actuating them in sequence such that as a display element is actuated the preceding one is deactuated giving the appearance of movement. Such techniques are often used with displays on meters and the like but where, in a mechanical equivalent, the movement would be continuous (for example due to a continuous change in a sensed parameter), conventional displays present a discontinuous movement which is often undesirable.

An alternative method of producing a moving display is shown in GB 1331940. Liquid crystal is disposed between sheet electrodes, with the area of the overlap of the electrodes defining a single display element. The sheet resistance of at least one of the electrodes is arranged to vary across the display element. This causes a variation in the potential difference between the two electrodes across the area of the display element, and as a result only discrete sectors within the display element are actuated. By varying the voltage of the electrodes, the actuated sector can be continuously moved across the display element.

In accordance with the present invention, a display system comprises a set of substantially identical, individually actuable display elements arranged side by side; and control means for selectively and simultaneously actuating a block of adjacent display elements, and for simulating movement of the block by actuating the next (leading) display element in the direction of movement and deactuating the trailing element while maintaining actuation of display element(s) between the leading and trailing display elements.

Due to the invention, a much smoother movement of the block will be achieved since at each actuation/deactuation step a number of the display elements will remain actuated.

Preferably, the display elements are arranged close together in contrast to known systems in which the display elements are often substantially spaced apart. A typical separation between adjacent display elements is of the order of 0.1mm or less.

Preferably, the display elements are elongate, for example rectangular, so that the block of display elements actuated at any instant will have the appearance of a pointer. This appearance can be enhanced if the control means deactuates at least one central display element of each block. Preferably, therefore, each block comprises an odd number of display elements, for example 5 or 7.

The display elements may be arranged in a straight line or in a curve, for example partially or completely in a circle.

In some applications, indicia are provided adjacent the display elements which, in use, are indicated by the actuated block. For example, such indicia could comprise time indicia in the case of a clock or other time piece, or values of a parameter which is being sensed.

As before, the display elements may be constituted by any suitable known elements including light emitting diodes and liquid crystal displays.

Another problem which can arise in some circumstances in connection with display systems is where it is required that the display system has a very large number of individually actuable display elements. Each element needs to have its own actuating wire and the wires must be connected from the element to drive circuitry. This makes it very difficult to pack a large number of display elements into a small area.

In a preferable embodiment of the present invention, the display system further comprises a first display member having a set of individually actuable display elements; and a second display member having a set of individually actuable display elements, the first member overlying the second member with the elements of the second member being laterally offset from the display elements of the first member and being visible through the first member.

In this case, a large number of individually actuable display elements can be provided in a relatively small area by providing two display members one above the other with their respective display elements offset laterally.

For example, the display elements of the first member may be positioned in a peripheral region of the first display member, and the display elements of the second member may be positioned in a central region of the second display member.

This embodiment is particularly suitable where each display member comprises a liquid crystal display having a pair of parallel polarisers on either side of liquid crystal material, there being no polarisers in the region of the first display member overlying the display elements of the second display member.

This embodiment of the invention is particularly suitable where a display according to the invention has display elements arranged in a circle. The display elements can be positioned close together while a second member can provide display elements in a central region of the first member without the need for wires from the display elements in the central region having to be taken between adjacent display elements of the first member.

Some examples of liquid crystal displays according to the invention will now be described and contrasted with known examples with reference to the accompanying drawings, in which:-
Figure 1 illustrates a conventional moving pointer display;
Figure 2 illustrates part of a moving pointer display according to an example of the invention;
Figure 3 is a schematic, exploded cross-section through part of the display system shown in Figure 2;
Figure 4 illustrates the electrodes and connectors for part of the analogue display of the Figure 2 example;
Figure 5 illustrates a display according to the invention;
Figures 6A and 6B illustrate displays produced by conventional apparatus;
Figures 7A and 7B illustrate digital displays generated by the display.

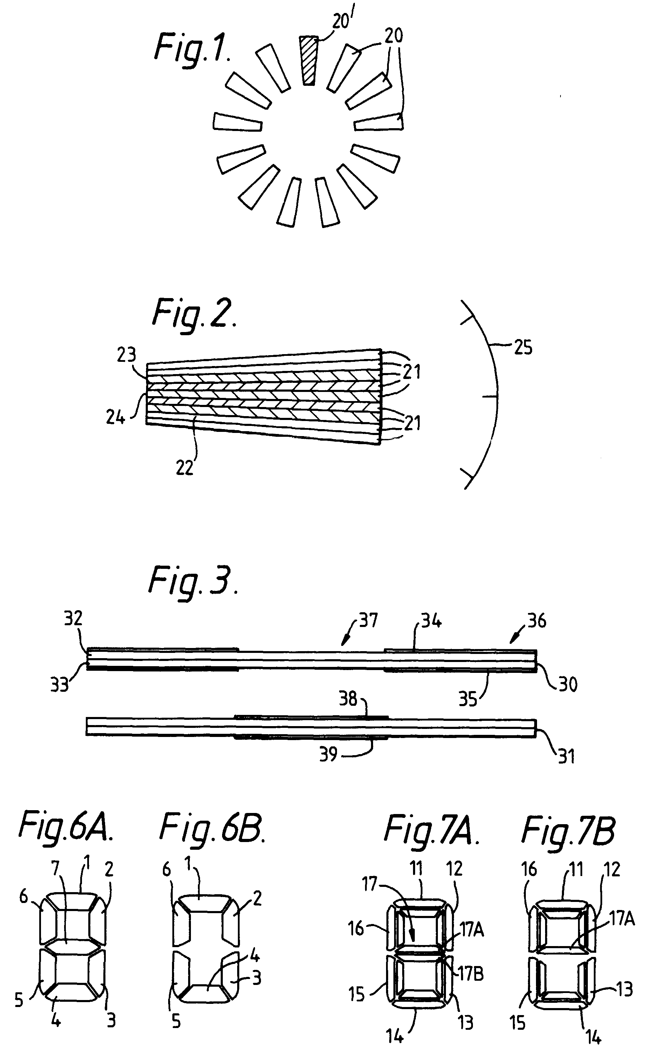

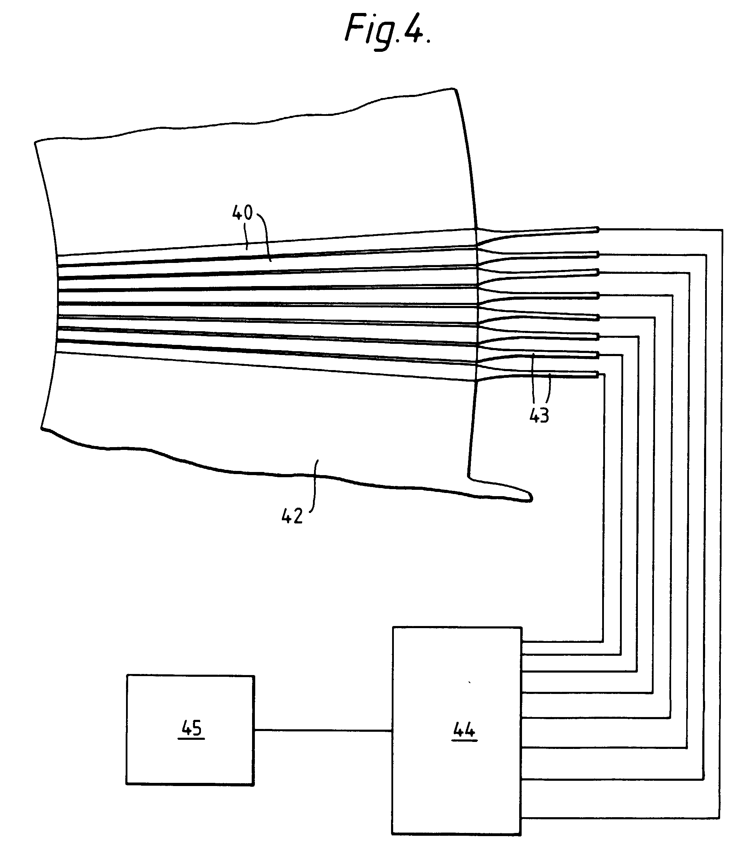

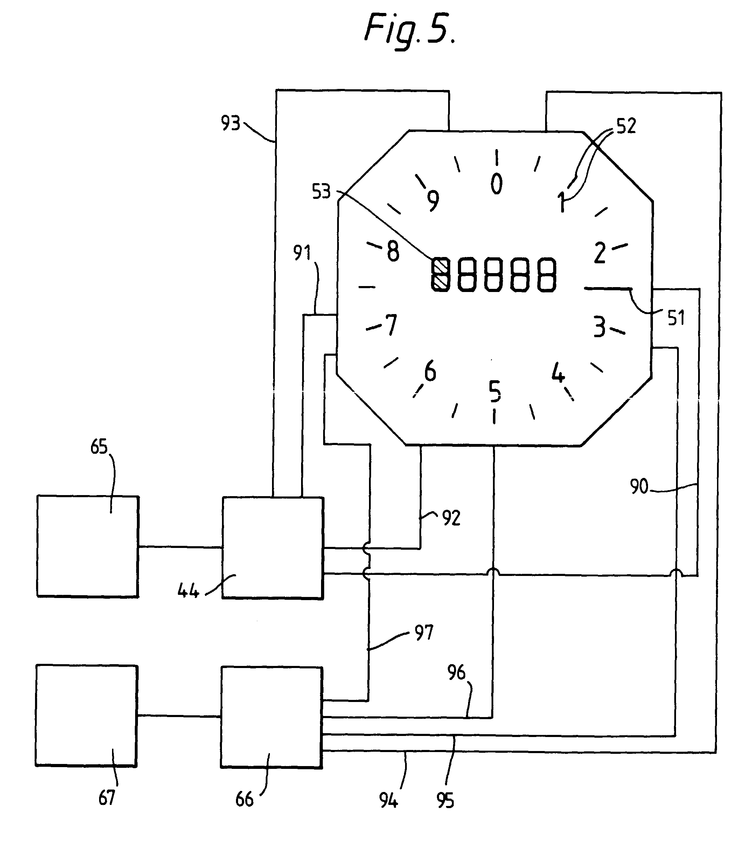

Figure 1 illustrates a conventional pointer display having a number of LCD display elements 20 arranged in a circle. Each element 20 is individually actuable as shown at 20' in Figure 1. To provide the effect of movement successive elements 20 are energised with the previous element being deenergised. However, due to the relatively small number of elements and the way in which they are actuated and deactuated, this can produce a rather undesirable stepped movement effect.

Figure 2 illustrates part of a display according to the invention. In this example, a set of elongate, closely packed display elements 21 are provided extending fully around a circle (not shown). Typically, the set of five actuated display elements 21 in Figure 4 will correspond in size to a single element 20 in Figure 1. In use, the pointer defined by the actuated elements 21 can be moved clockwise, as seen in Figure 2, by actuating the next element 21 in the sequence (indicated at 22) and deactuating the trailing segment (indicated at 23). It will be noted that the four elements between the element 22 and the element 23 remain actuated during this process. The result gives the appearance of a smoothly moving pointer in contrast to the stepped movement of Figure 1. The appearance of the pointer can be increased still further by deactuating the central element giving a central marker to replace the conventional point. In the case of Figure 2, this would be the element indicated at 24.

Typically, the display shown in Figure 2 will be surrounded by a scale, part of which is shown at 25. Preferably, the fixed indicia are defined by the rear polariser, or are provided between the liquid crystal material and the rear polariser, as described in our copending European patent application EP-A-0 625 721 of even date entitled "Improvements Relating to Liquid Crystal Displays".

Figure 3 illustrates a preferred example of a display system according to the invention which, in this case, comprises a pair of liquid crystal display members 30,31. Each member 30,31 is of the polarising type. That is, each comprises a pair of glass sheets, for example sheets 32,33 between which is provided a micron thick layer of a liquid crystal material. The facing surfaces of the glass sheets 32,33 carry conductive electrodes shaped to conform to the display elements and wires connecting the plates to remote drive circuitry (not shown). Typically, the electrodes and wires will be etched onto the glass plates 32,33 using a conventional photoresist technique. The member 30 has on its upper and lower surfaces respective annular polarisers 34,35 which polarise light in parallel directions.

Figure 4 is a plan view of part of the moving display, showing the electrodes. The upper sheet 32 has individual segment electrodes 40 (corresponding to elements 21) on its lower surface. The electrodes 40 are connected to a control unit 44 by wires 43. The control unit 44 addresses the required electrodes in response to an input signal from detector 45 which detects a parameter. The liquid crystal layer between the two sheets is activated by applying a voltage to one or more of the electrodes 40. With no voltage applied, the liquid crystal rotates the angle of polarisation of the light by 90°, resulting in a black display. When a segment electrode 40 is energised, the region of liquid crystal between the selected electrode and common electrode has a potential difference across it which removes the optical effect of the liquid. This allows light to pass through the display. The lower sheet 33 has a single plane common electrode 42. The polarisers 34,35 are provided in a peripheral region 36 of the member 30 while a central region 37 is left uncovered so that the member 31 is viewable through the central region 37.

The central region of the member 31 carries parallel polarisers 38,39 but is otherwise of a similar construction to the member 30.

In use, the two members, 30,31 are sandwiched together and coupled to respective drive circuits which enable the display elements in the members 30,31 to be actuated. This construction is also described in our copending European patent application EP-A-0 626 608 of even date entitled "Display System".

An example of an application of the Figure 3 construction would be as a display for indicating the values of two different parameters. If, for example, the display elements of the member 30 had a form similar to that shown in Figure 2 then a scale could be provided around the circumference of the member 30 which is pointed to by suitably actuating blocks of display elements. The central region will provide a display generated by the member 31 showing the value of some other parameter either in digital form or with an additional pointer of the type shown in Figure 2.

An example of this embodiment is shown in Figure 5, which illustrates an LCD visual indicator. This has an outer annulus with a moving pointer 51, which points at fixed indicia 52. This provides a simulated analogue display. Each electrode in the analogue display is connected to the control unit 44, which controls the display in response to signals from detector 65. The central region of member 31 provides a digital display with variable display elements 53. The digital display is connected to a control unit 66, which activates the display in response to a detector 67 which may detect another parameter. Alternatively, the digital display may also be connected to the detector 45.

The central digital display could be implemented using techniques illustrated in Figure 6 or 7.

Figure 6A illustrates the bar like display elements 1-7 of a conventional liquid crystal numeric display. By suitably actuating the elements 1-7 it is possible to provide displays of all the numerals from zero to nine. A problem arises, as can be seen in Figure 6B, if one of the display elements, in this case the display element 7, is faulty. In this case, the drive electronics will attempt to cause the LCD display to display the numeral "8" but as can be seen in Figure 6B since the display element 7 will not actuate, the display has the appearance of the value "0".

Figures 7A and 7B illustrate the solution to this problem. As can be seen in Figure 7A, each display element 11-17 is formed of two sub-elements, for example sub-elements 17A,17B. If one of the sub-elements fails, for example the sub-element 17B, when the drive electronics attempts to cause the display of the numeral "8" the resultant display (Figure 7B) will still have the appearance of the numeral 8 due to actuation of the display element 17A.

## Claims

1. A display system comprising a set of substantially identical, individually actuable display elements (21) arranged side by side; and control means for selectively and simultaneously actuating a block of adjacent display elements, and for simulating movement of the block by actuating the next (22) (leading) display element in the direction of movement and deactuating the trailing element (23) while maintaining actuation of display element(s) between the leading and trailing display element.

2. A system according to claim 1, wherein the control means deactuates at least one central element (24) of the block.

3. A system according to claim 1 or claim 2, wherein each block comprises an odd number of display elements, for example 5 or 7.

4. A system according to any of claims 1 to 3, wherein the display elements are arranged partially or completely around a circular arc.

5. A system according to any of claims 1 to 4, further comprising indicia (25) arranged alongside the display elements, the indicia defining values of a parameter.

6. A display system according to any of the preceding claims wherein the set of substantially identical, individually actuable display elements (21) are provided in a first display member, the system further comprising a second display member (31) having a set of individually actuable display elements (53), the first member overlying the second member with the elements of the second member being laterally offset from the display elements of the first member and being visible through the first member.

7. A system according to any of the preceding claims, wherein the display elements are defined by a liquid crystal display.

8. A system according to claim 7, wherein each display member comprises two transparent layers (32,33) separated by a liquid crystal layer, and each transparent layer is coated with a polarising layer (34,35).

## Patentansprüche

1. Anzeigesystem mit einem Satz im wesentlichen identischer, individuell betätigbarer Anzeigeelemente (21), die Seite an Seite angeordnet sind und Steuermitteln zum wahlweisen und gleichzeitigen Betätigen eines Blockes aneinander angrenzender Anzeigeelemente und zum Simulieren der Bewegung des Blocks durch Aktivierung des nächsten (22), (führenden bzw. vorderen) Anzeigeelementes in Richtung der Bewegung und Deaktivierung des hinteren Elementes (23), während die Aktivierung des bzw. der Anzeigeelement(e) zwischen dem vorderen und dem hinteren Anzeigeelement aufrechterhalten wird.

2. System nach Anspruch 1, wobei das Steuermittel wenigstens ein zentrales Element (24) des Blockes deaktiviert.

3. System nach Anspruch 1 oder 2, wobei jeder Block eine ungerade Anzahl an Anzeigeelementen aufweist, beispielsweise fünf oder sieben.

4. System nach einem der Ansprüche 1 bis 3, wobei die Anzeigeelemente teilweise oder vollständig um einen kreisförmigen Bogen angeordnet sind.

5. System nach einem der Ansprüche 1 bis 4, des weiteren mit Anzeigen bzw. Markierungen (25), die an der Seite der Anzeigeelemente angeordnet sind und Werte eines Parameters definieren.

6. Anzeigesystem nach einem der vorstehenden Ansprüche, wobei der Satz im wesentlichen identischer, individuell aktivierbarer Anzeigeelemente (21) in einem ersten Anzeigeteil vorgesehen ist und das System des weiteren ein zweites Anzeigeteil (31) aufweist, mit einem Satz individuell aktivierbarer Anzeigeelemente (53), wobei das erste Teil über dem zweiten Teil liegt, wobei die Elemente des zweiten Teils seitlich zu den Anzeigeelementen des ersten Teils versetzt und durch das erste Teil sichtbar sind.

7. System nach einem der vorstehenden Ansprüche, wobei die Anzeigeelemente definiert werden durch eine Flüssigkeitskristallanzeige.

8. System nach Anspruch 7, wobei jedes Anzeigeteil zwei transparente Schichten (32, 33) aufweist, die durch eine Flüssigkeitskristallschicht getrennt sind und jede transparente Schicht von einer Polarisierungsschicht (34, 35) überzogen ist.

## Revendications

1. Système d'affichage comprenant un jeu d'éléments d'affichage (21) essentiellement identiques, activables individuellement, disposés côte-à-côte; et un moyen de commande pour activer sélectivement et simultanément un bloc d'éléments d'affichage contigus, et pour simuler un déplacement du bloc en activant l'élément d'affichage suivant (22) (de tête) dans la direction du déplacement, et en désactivant l'élément (23) de queue tout en maintenant l'activation du ou des éléments d'affichage situés entre l'élément d'affichage de tête et l'élément d'affichage de queue.

2. Système selon la revendication 1, dans lequel le moyen de commande désactive au moins un élément central (24) du bloc.

3. Système selon la revendication 1 ou la revendication 2, dans lequel chaque bloc comporte un nombre impair d'éléments d'affichage, par exemple 5 ou 7.

4. Système selon l'une quelconque des revendications 1 à 3, dans lequel les éléments d'affichage sont disposés partiellement ou complètement sur un arc de cercle.

5. Système selon l'une quelconque des revendications 1 à 4, comportant en outre des repères (25) disposés le long des éléments d'affichage, les repères définissant des valeurs d'un paramètre.

6. Système d'affichage selon l'une quelconque des revendications précédentes, dans lequel le jeu d'éléments d'affichage (21) essentiellement identiques, activables individuellement, est prévu dans un premier organe d'affichage, le système comportant en outre un deuxième organe d'affichage (31) présentant un jeu d'éléments d'affichage (53) activables individuellement, le premier organe étant superposé au deuxième organe, les éléments du deuxième organe étant décalés latéralement par rapport aux éléments d'affichage du premier organe et étant visibles à travers le premier organe.

7. Système selon l'une quelconque des revendications précédentes, dans lequel les éléments d'affichage sont définis par un affichage à cristaux liquides.

8. Système selon la revendication 7, dans lequel chaque organe d'affichage comporte deux couches transparentes (32, 33) séparées par une couche de cristaux liquides, et chaque couche transparente est revêtue d'une couche polarisante (34, 35).
